Europäisches Patentamt

European Patent Office

Office européen des brevets

(11) Publication number : **0 489 575 A1**

# (12) EUROPEAN PATENT APPLICATION

(21) Application number : **91311250.4**

(22) Date of filing : **03.12.91**

(51) Int. Cl.⁵ : **B01D 45/08, B01D 45/10**

(30) Priority : **03.12.90 GB 9026228**

(43) Date of publication of application :
**10.06.92 Bulletin 92/24**

(84) Designated Contracting States :
**DE ES FR IT NL**

(71) Applicant : **PALADON(ENGINEERING) LIMITED**
**Station Road**
**West Haddon, Northants NN6 7AU (GB)**

(72) Inventor : **Forsyth, Donald F.**
**Fairbourne, 11 King's Lane, Flore,**
**Northampton NN7 4LQ (GB)**
Inventor : **Chamberlain, N. Paul**
**The Rose Barn, Moulton Road, Pitsford,**
**Northampton (GB)**
Inventor : **Woollcott, Alan David**
**12 Pytchley Close, Brixworth,**
**Northampton NN6 9EW (GB)**

(74) Representative : **Goodenough, Nigel et al**
**A.A. Thornton & Co. Northumberland House**
**303-306 High Holborn**
**London WC1V 7LE (GB)**

(54) **Modular device for separating liquids from gas streams.**

(57)   A demister for separating entrained liquid from a gas flow comprises a plurality of modules 15,16,17 arranged in series. Modules 15 and 17 comprise a plurality of hollow vanes each having an opening on the major face thereof for receiving liquid into the interior of the vanes. The module 16 comprises solid blade-like vanes. The characteristics of the device may be varied by inserting or removing modules at will in light of flow conditions encountered in use.

FIG 5

EP 0 489 575 A1

This invention relates to a device for separating liquids from gas streams, the device being assembled from a plurality of similar modules, and to modules suitable for use in forming such a device. The preferred embodiment of the invention is in the form of a demister, but the invention is not limited to this embodiment and in particular the invention may be of use in connection with devices for removing liquid foam from a gas stream.

Demisters are commonly used for removing entrained liquid (and optionally dust) particles from a flow of gas. The gas may be a hydrocarbon gas or may be some other gas, and the term "gas" should be construed broadly enough to cover any gaseous or vapour flow from which mist particles are to be removed.

A demister comprises essentially means defining a flow passage through which the gas to be demisted flows, and a fill located within the flow passage for collecting droplets of liquid from the gas flow. The fill may comprise vanes, and a demister has been proposed in which the vanes are hollow and the interiors of the vanes are used for collecting and removing liquid which has been deposited on the surface of the vanes. Whilst such demisters offer certain advantages, the vanes of prior art demisters of this type as shown, for example, in GB-A-2199260 are complex which renders the demisters difficult to manufacture. Also, because each vane extends substantially the full length of the flow passage in the direction of flow the demister tends to be inflexible in its application - each demister must be specifically designed and manufactured in light of the likely flow conditions to be encountered and cannot readily be modified after installation to take account of any changes in flow conditions.

According to one aspect of the present invention there is provided a thin flat module for assembly with other modules to form a device for separating liquids from gas streams, the module comprising: a frame defining a flow passage for gas to be treated; a plurality of hollow vanes spanning the flow passage and secured to the frame; and a collection channel for collecting liquid from the interiors of the hollow vanes, wherein the vanes are generally flat, parallel to each other, and extend obliquely to the longitudinal axis of the flow passage, and wherein each vane on the major face thereof which faces the flow of gas to be treated is formed with at least one opening which allows liquid flowing along the said major face to enter the interior of the vane for collection.

The term "thin flat module" is intended to mean that the thickness of the module, when measured in the direction of the longitudinal axis of the flow passage, is small compared with the size of the module measured transversely to the said longitudinal axis. In the preferred embodiment of the invention each module comprises only a single set of parallel vanes which extend across the frame in a manner similar to the slats of a louvered door. Such a module is particularly simple to manufacture and may be assembled together with other similar modules to form a demister in which the flow passage is crossed by a multiplicity of sets of vanes. By suitably rotating each module relative to the modules both upstream and downstream of it the form of the passages into which the flow passage is divided by the vanes may be altered. Also, by adding or removing modules or by changing one or more modules for modules with different vane arrangements characteristics of the demister formed from the assembly of modules may be selected or altered at will.

The invention will be better understood from the following description of preferred embodiments there of, given by way of example only, reference being had to the accompanying drawings wherein:

Figure 1 is a transverse cross-section of a portion of a demister formed from a plurality of modules, taken on the line I-I of Figure 3;

Figure 2 is a cross-sectional view of the demister of Figure 1 taken perpendicular to the cross-section of Figure 1;

Figure 3 is a top plan view of one embodiment of module according to the present invention;

Figure 4 is a top plan view of a second embodiment of module according to the present invention; and

Figure 5 illustrates schematically a demister formed from a plurality of modules.

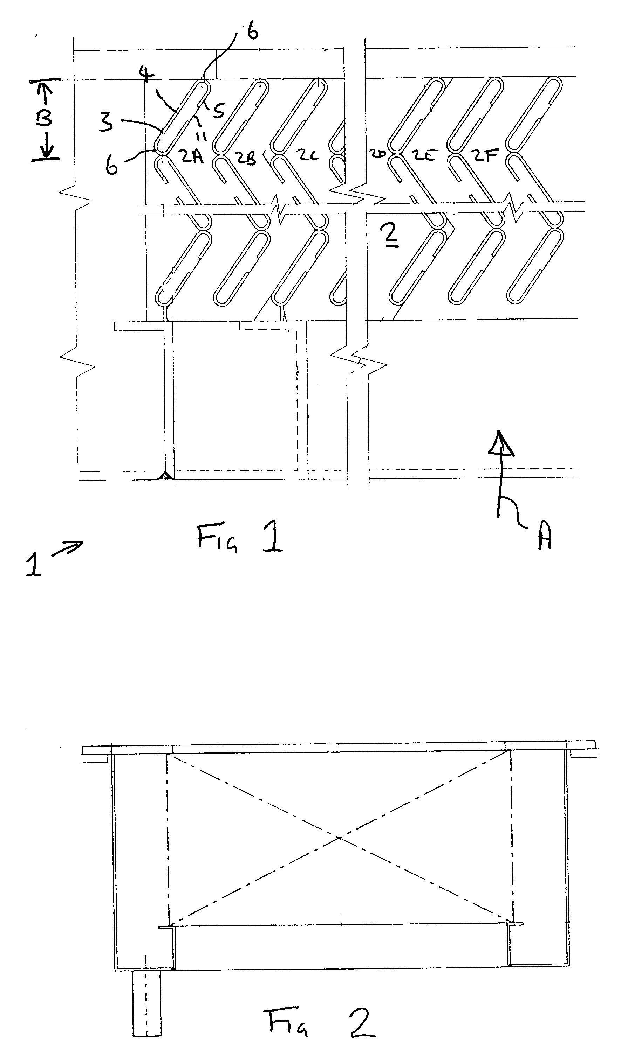

Referring firstly to Figures 1-3 there is illustrated a demister 1 suitable for removing entrained droplets of liquid from a gas flow. Gas flow through the demister is in the general direction of the arrow A of Figure 1 - vertically upwardly through a flow passage 2 defined within the demister. It should be appreciated, however, that the invention is not limited to vertical flow demisters but is also of value in connection with demisters in which the gas flow is generally horizontal and indeed in connection with other forms of device for separating liquids from a gas flow. The flow passage 2 is divided into a plurality of serpentine passages 2A-2F by a multiplicity of vanes 3. Each vane 3 is hollow and when viewed externally is generally of flat slat-like appearance having flat opposed sides 4,5 interconnecting rounded ends 6.

The demister 1 is made up of a plurality of modules each comprising a single layer of vanes. In other words, the overall thickness of the top module of the demister illustrated in Figure 1 is "B", this dimension being considerably less than the overall size of the module measured perpendicular to the thickness B. Accordingly, each module is relatively thin. Each module comprises a frame 7 having a central opening 8 which forms the flow passage 2. The vanes 3 are supported by the frame 7 and span the flow passage 2 to divide the flow passage into the multiplicity of passages illustrated in Figure 1.

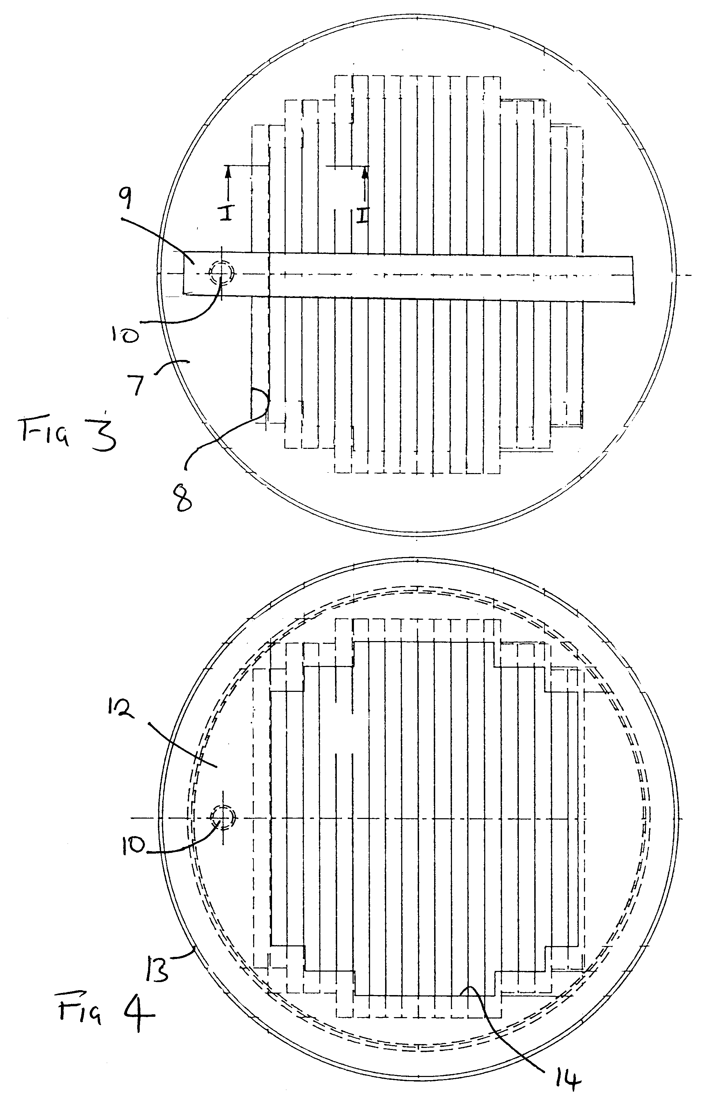

In the embodiment of the invention illustrated in Figure 3 one end of each vane 2 opens into a central channel 9 for collecting liquid from the interior of the vanes. The opposite end of each vane is supported on the frame, e.g. by being welded to a plate which defines the opening 8. The channel 9 includes an opening 10 which connects the channel to the channel of the module immediately below whereby liquid collected within the channels 9 is drained to the bottom of the demister for removal via a suitable duct.

Each vane 3 has, on the face 5 thereof which is directed towards the flow of gas through the flow passageway 2, an elongate opening 11. Preferably, the openings 11 extend the full length of each vane. The openings 11 permit liquid flowing along the surface of the vane to enter the interior of the vane for collection by the channel 9.

In the demister illustrated in Figure 1 the successive modules which are stacked on top of each other to form the demister are rotated 180° relative to each other to form the serpentine passages 2A-2F. It will be appreciated that each module is of relatively simple form despite the fact that the demister overall defines relatively complex serpentine flow passages each of which is furnished with a multiplicity of possible liquid collection openings 11. Whilst in the preferred embodiment described above each module is substantially identical to the adjacent modules it should be appreciated that this is not necessarily always the case and indeed in certain instances it may be desirable for adjacent modules to be of different form, for example to have different sizes and/or shapes of vane or different vane spacings or angles. The invention is particularly advantageous in allowing demisters or other devices for removing liquids from gas flows to be built up using different modules and in allowing an existing device to be modified by the substitution of one or more different modules for one or more modules originally provided in the device.

By way of example, a demister 12 is schematically illustrated in Figure 5 which is formed from a plurality of different modules assembled together one atop the other. The demister comprises a base frame 13 which defines an inlet 14 through which a gas flow carrying liquid particles and/or dust and/or liquid foam is received. From the inlet 14 the flow is directed through the base frame to a first module 15 which comprises two layers of slanting vanes arranged chevron-like to define a multiplicity of passages. The first module 15 may be a unitary construction or may itself be made up of two sub-modules as described above rotated 180o relative to each other. The first module 15 is designed to have a high liquid handling capacity and to this end the high velocity gas flowing through the passages defined by the module is forced to turn through a tight angle to give high removal of liquid particles. The number of layers of vanes in the first module will depend on the expected liquid content of the incoming gas flow. If it is found as a practical matter that the design capacity of the first module is not sufficient, additional layers of vanes can be added as necessary.

After leaving the first module the gas flow passes through a small void which acts as a recovery distance to reunite and homogenize the gas flow from the separate passages of the first module. The gas flow then enters a second module 16 which comprises a multiplicity of chevron-shaped solid blades closely packed and providing a tight angle through which the gas flow must pass. The effect of the module 16 is to collect small particles which have not been removed in the module 16 and to combine these small particles into larger droplets. As with the module 15, the length of the module 16, measured in the flow direction, can be varied by adding additional similar modules.

After leaving the module 16 the gas flow enters a module 17 which is generally similar to the module 15 but which has vanes of a narrower construction at a wider pitch and defining a smaller angle to the longitudinal direction. This module is intended to remove the large droplets formed in the second module 16 and offers a relatively small impedance to flow hence allowing a large volume of gas to pass for an equivalent vane area.

In the illustrated embodiment, a tubular retainer 18 spans the gap between the exit end of the module 17 and the exit 19 of the demister. The void defined by the retainer 18 may be used to house further elements of the demister, for example an overload element which will act to catch gross flow of liquid in the event of a sudden surge of liquid which overwhelms the liquid removing capacity of the modules 15,16,17. Further, it will be noted that if it is desired to add a further module to the demister the retainer may be removed, the additional module added at the required point, and a modified retainer of shorter length installed in order to keep the overall length of the demister from the inlet 14 to the exit 19 constant.

The module described above can readily be manufactured utilizing conventional fabrication techniques, and in the preferred embodiment of the invention each vane is formed by a rolling process which does not limit the length of the vane. Hence, previous limitations on the length of the vane which were imposed by the difficulty of manufacturing complex vanes in long lengths are removed.

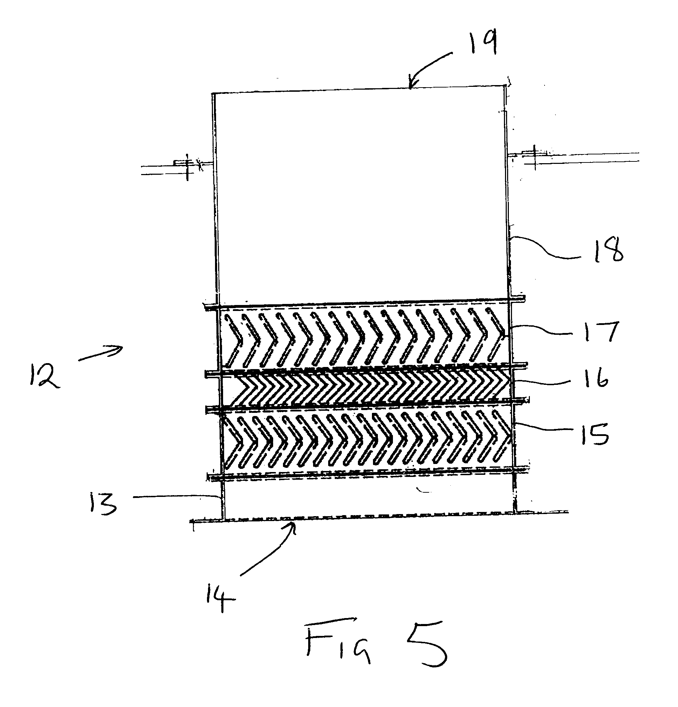

Referring now to Figure 4 an alternative module is illustrated in which the central channel 9 of Figure 3 is replaced by a peripheral channel 12 formed by the frame 13 of the module. As before, an opening 10 is provided to permit liquid collected within the channel 12 to drain into the corresponding channel of the module below. The vanes 3 of the module illustrated in Figure 4 may pass through the plate 14 which defines the central opening of the frame at both ends of each vane, or one end may pass through the plate in order to provide drainage from each vane whilst the other end of each vane is butted against the plate and welded thereto.

Whilst in the preferred embodiment of the invention each module is only a single vane thick it will be appreciated that in the alternative each module may comprise several layers of vanes which extend parallel to each other or which are arranged to provide a more complex flow path, for example a serpentine flow path as illustrated in Figure 1. The important feature of the present invention is that each vane is generally flat and is accordingly simple to manufacture and versatile in application.

## Claims

1. A thin flat module for assembly with other modules to form a device for separating liquids from gas streams, the module comprising: a frame defining a flow passage for gas to be treated; a plurality of hollow vanes spanning the flow passage and secured to the frame; and a collection channel for collecting liquid from the interiors of the hollow vanes, wherein the vanes are generally flat, parallel to each other, and extend obliquely to the longitudinal axis of the flow passage, and wherein each vane on the major face thereof which faces the flow of gas to be treated is formed with at least one opening which allows liquid flowing along the said major face to enter the interior of the vane for collection.

2. A module according to claim 1 wherein there are a plurality of layers of vanes arranged in juxture position, the vanes of each layer being parallel to the other vanes in that layer and being at an angle to the vanes of the or each adjacent layer whereby the vanes together define a plurality of chevron or serpentine paths for gas flow through the module.

3. A module according to claim 2 wherein a channel centrally spans the frame and the vanes are each connected to the channel with the interior of each vane in communication with the interior of the channel whereby liquid collected within the vanes may flow into the channel for removal from the module.

4. A module according to claim 3 wherein the channel is provided with an opening whereby liquid collected in the channel may drain into the channel of the module located immediately beneath.

5. A module according to claim 1 or claim 2 wherein a channel is defined at the periphery of the frame and the vanes are each connected to the channel with the interior of each vane in communication with the interior of the channel whereby liquid collected within the vanes may flow into the channel for removal from the module.

6. A module according to claim 5 wherein the channel is provided with an opening whereby liquid collected in the channel may be drained into the channel of the module located immediately beneath.

7. A device for separating liquids from gas streams comprising at least one module according to any preceding claim assembled with at least one other module comprising: a frame defining a flow passage for gas to be treated; a plurality of hollow vanes spanning the flow passage and secured to the frame; and a collection channel for collecting liquid from the interiors of the hollow vanes, wherein the vanes are generally flat, parallel to each other, and extend obliquely to the longitudinal axis of the flow passage, and wherein each vane on the major face thereof which faces the flow of gas to be treated is formed with at least one opening which allows liquid flowing along the said major face to enter the interior of the vane for collection.

8. A device according to claim 7 including a further module comprising a plurality of solid vanes arranged between said hollow vane modules.

9. A thin flat module for assembly with other modules to form a device for separating liquids from gas streams substantially as hereinbefore described with reference to the accompanying drawings.

10. A device for separating liquids from gas streams substantially as hereinbefore described with reference to the accompanying drawings.

Fig 1

Fig 2

Fig 3

Fig 4

Fig 5

**European Patent Office**

## EUROPEAN SEARCH REPORT

Application Number

EP    91 31 1250

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|----------|-------------------------------------------------------------------------------|-------------------|------------------------------------------------|
| A | EP-A-0 272 765 (ARETZ ,H,J, ET AL.)<br>--- | | B01D45/08<br>B01D45/10 |
| A | BE-A-560 126 (GEA-LUFTKÜLER-GESELLSCHAFT MBH.)<br>--- | | |
| A | GB-A-2 136 313 (JOHN SHACKELL.)<br>--- | | |
| A | FR-A-778 518 (P.WILLOUGHBY.)<br>--- | | |
| A | GB-A-1 157 466 (KLÖCKNER-HUMBOLDT-DEUTZ AKTIENGESELLSCHAFT.)<br>--- | | |
| A | US-A-4 204 847 (RAYMOND KO.)<br>--- | | |
| A | GB-A-906 644 (HAPPEL GESELLSCHAFT MIT BESCHRANKTER HAFTUNG.)<br><br>----- | | |

| | | | TECHNICAL FIELDS SEARCHED (Int. Cl.5 ) |
|--|--|--|----------------------------------------|
| | | | B01D |

The present search report has been drawn up for all claims

| Place of search | Date of completion of the search | Examiner |
|-----------------|----------------------------------|----------|
| THE HAGUE | 12 FEBRUARY 1992 | PYFFEROEN K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0404)